# EUROPEAN PATENT APPLICATION

(11) **EP 3 539 428 A1**
(43) Date of publication of application: **18.09.2019**
(21) Application number: 17870385.6
(22) Date of filing: 07.11.2017
(51) Int. Cl.: A47J 36/16, A47J 36/34, A47J 36/36, A47J 37/10

(54) **PAN WITH A MOVABLE SPLATTER PREVENTION DEVICE**

(30) Priority: 08.11.2016 BR 102016026145
(71) Applicant: De Campos, Rubens Pertence, Belo Horizonte (BR); Pertence De Campos, Paulo Vitor, Belo Horizonte (BR)
(72) Inventor: De Campos, Rubens Pertence, Belo Horizonte (BR); Pertence De Campos, Paulo Vitor, Belo Horizonte (BR)
(74) Representative: Pereira da Cruz, Joao
(86) International application number: PCT/BR2017/050335
(87) International publication number: WO 2018/085908

(57) **Abstract**

The present pan has been developed to provide a definitive solution to the problem of frying food on domestic or industrial cookers using conventional frying pans or saucepans, during which the top, glass cover, rings and burners of the cooker are completely soiled with splatters of fat and also everything in the vicinity is subjected to absorbing splatters, the cooker being most affected and the greatest target of splatters of fat when food is fried in conventional pans which do not have any device for preventing splatters of fat. The present pan with a movable splatter prevention device is the definitive solution and solves 99% of the problem of splatters of fat which are scattered across the kitchen and soil the cooker and everything in the vicinity, since this pan for preventing splatters of fat is adapted to prevent sideways splatters of fat, namely horizontal splatters, and splatters of fat traveling from the bottom upwards, namely vertical splatters, and is also adapted to allow the pan to be covered with a lid, which is held suspended three centimeters above the edge of the pan to allow air to enter the pan, without smothering the frying food or causing water to form at the bottom of the pan.

## Description

The present patent of invention refers to a pan having a different format to conventional ones already on the market and which has a movable splatter prevention device on the central upper edge designed to neutralize the vertical fat splatters which are those from the bottom of the pan that splash from bottom to top and the horizontal splashes which are those that splash through the sides of the pan and being able to make use of the lid that frying does not that smother and does not even form water at the bottom of the pan.

Splashes come from fried foods made in household or industrial cookers when frying any type of foods in common pans which are the already existing conventional ones, that cannot prevent splashes of fat droplets that spread to all sides and dirty the entire cooker and even beyond the kitchen.

The pans currently on the market for cooker frying are totally inefficient in the matter of preventing splashes and do not solve the problem of fat droplet splashes on the cooker and are frying pans without a lid; frying pans with lid; saucepans with lid; frying pans with a perforated lid; frying guards and perforated lids for frying.

In the first case which is the common frying pan without a lid, there is the drawback of placing the food to be fried directly into the frying pan with heated oil that immediately splatters to the sides and from bottom to top.

The second case which is the frying pan with a lid would be the same process as the frying pan with the lid and when using the lid, it smothers the frying and forms water instead of frying, cooking the food when the aim is to fry.

The third case of the saucepan with lid would be the same process as the frying pan with a lid and when using the lid to prevent splashing, the food being fried accumulates water and does not fry but cooks instead.

In the fourth case of the frying pan with a perforated lid, when placing the food to fry in hot oil, butter or lard, fat droplets automatically splatter the cooker and by the time the perforated lid has been placed, it has already soiled the whole cooker and the perforated lid which is designed not to smother the frying so as not to create condensation, is not effective enough, and despite the perforations on the lid, the frying accumulates water at the bottom of the pan.

In the fifth case which is the round-shaped frying guards with perforations throughout and with a handle for handling, to be placed on the edge of frying pans or saucepans, do not solve the problems of vertical and horizontal fat droplet splashing.

Frying pans and saucepans that are pans to make fried foods are known in the market and have been sold for decades, working on the principle, placing steaks, pork rind, sausages, potatoes directly into the frying pan or saucepan with already heated oil and fat automatically splashes everywhere and which are the horizontal splash that are called side splashes and which splash over the edge of the pan and the vertical splashes which are the splashes that splatter from the bottom of the pan out upwardly from the bottom of the pan outwardly and when using the lid to prevent splashing, water accumulates in the fry and instead of frying, it boils the fry and since the cooker is most affected and the target of fat spatter when frying and having its tabletop, glass top, trivets and burners completely covered with fat splashes from frying foods in conventional pans and not even the air purifier and that fat that stays on the cooker is the solution to prevent fat spatter when frying.

In order to remedy such drawbacks, this pan has been developed with a movable splatter prevention device, the device being shaped like a ring and with a central hollow and having four guide pins in the vertical position embedded in the device and which will be used at the edge of the pan, so that this device keeps the lid of the pan suspended three centimeters relative to the upper edge of the pan for air intake so as not to smother the frying or form water at the bottom of the pan, the aim being to fry without soiling the cooker and eliminating about 99% of the dirt with splashes of fat droplets from the process of making fried foods on a household or industrial cooker and this pan with movable splatter prevention device can be made of aluminum, non-stick aluminum, stainless steel, cast iron, non-stick ceramic or induction ceramic, and may be in the shape of a frying pan with a handle or with two side grips with a lid or in the shape of a saucepan with two handles on the sides and a lid, the difference being that the edge of the pan does not come into contact with the edge of the lid in the frying process, the upper edge diameter maintaining the measurements of standard market pans which are twenty-four centimeters, twenty-six centimeters, twenty-eight centimeters and thirty centimeters.

The pan with the movable splatter prevention device can be better understood through the following detailed description in line with the accompanying figures, where:

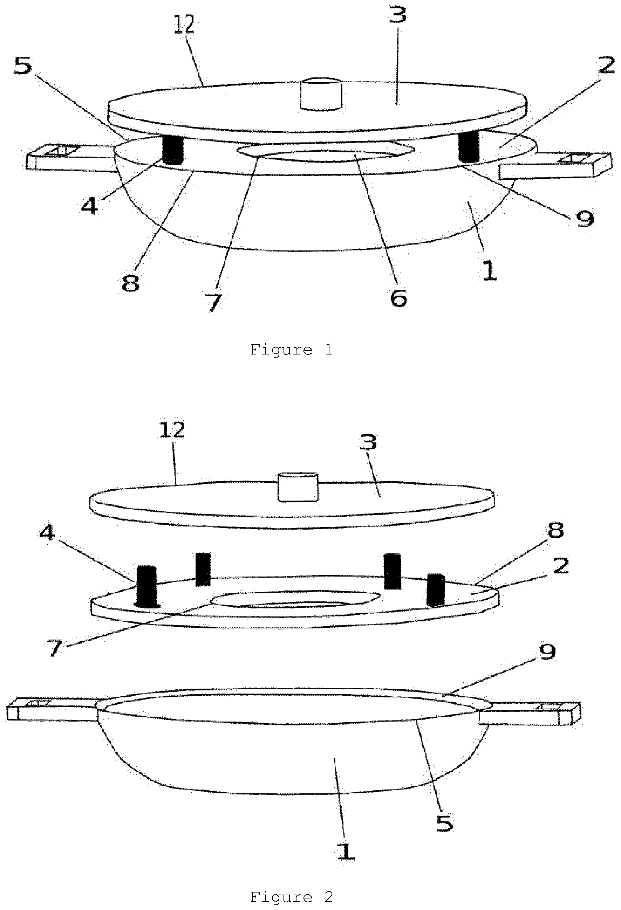

- Figure 1 represents a front view of the pan for frying with the movable splatter prevention device;
- Figure 2 represents a cutaway view of the pan for frying with the movable splatter prevention device;

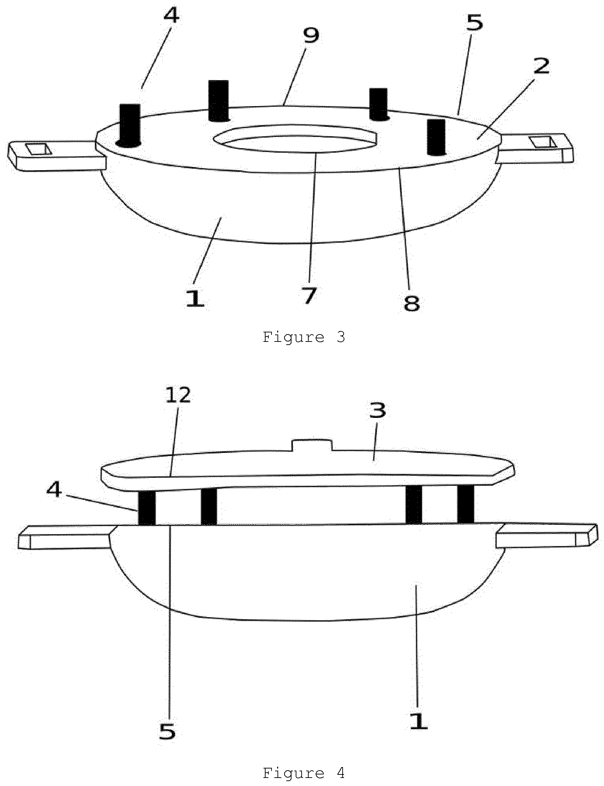

- Figure 3 represents a front view of the pan with the movable splatter prevention device and without the lid;
- Figure 4 represents a front view of the pan with the lid on the four guide pins of the movable splatter prevention device to keep the lid three centimeters suspended over the edge of the pan for air intake and not to smother the frying or water formation at the bottom of the pan;

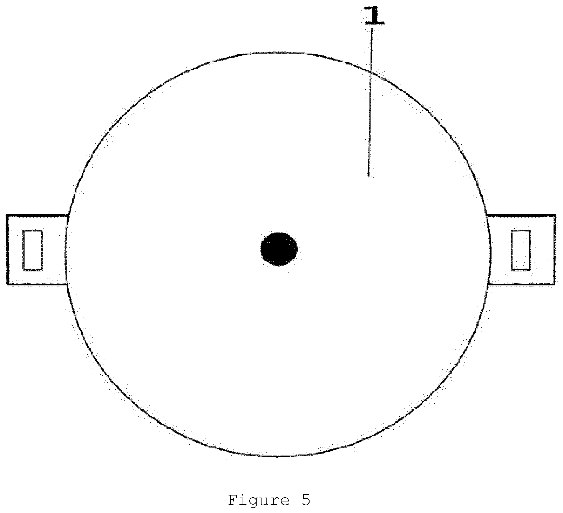

- Figure 5 represents a vertical view from top to bottom of the pan with the lid;

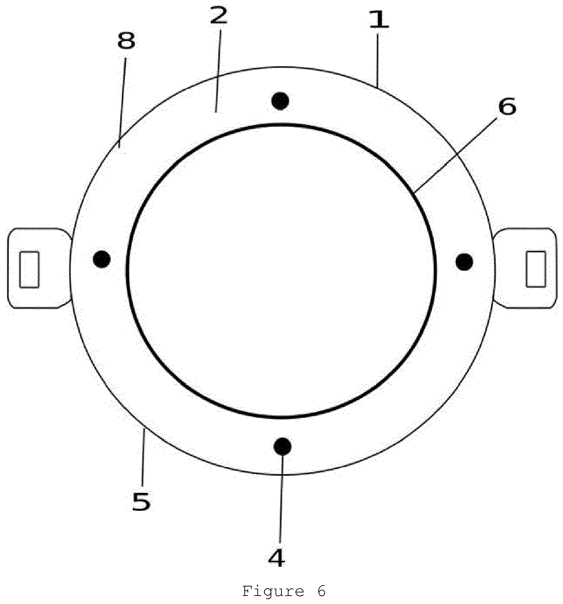

- Figure 6 represents a vertical view from top to bottom of the pan with the movable splatter prevention device and without the lid;

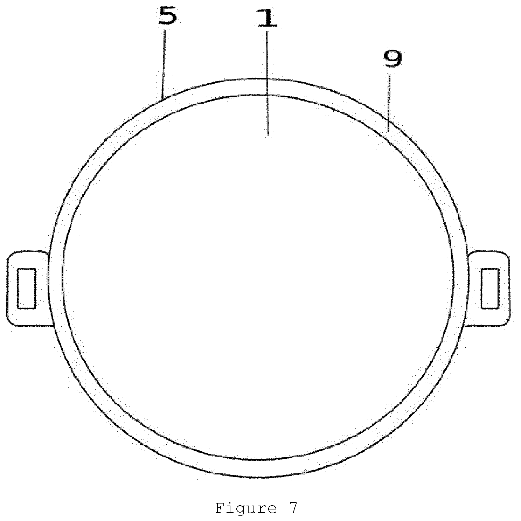

- Figure 7 represents a vertical view from top to bottom of the pan without the movable splatter prevention device and without the lid;

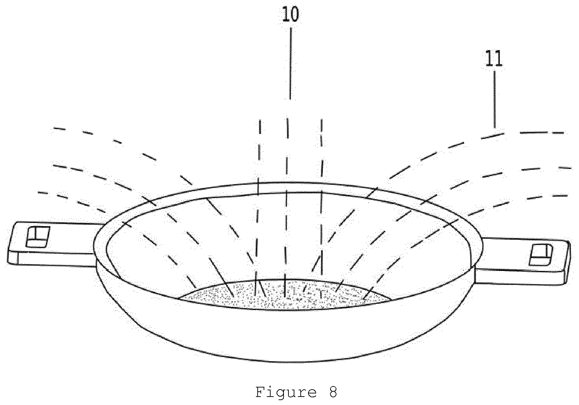

- Figure 8 represents a front view of a pan without any splatter prevention device and shows the positions of the horizontal splatter of fat droplets which are the sides splashes that splatter through the edges of the pan and the vertical splashes which splatter upwardly from the bottom of the pan.

With reference to these figures, it can be noted that the pan (1) which has a movable splatter prevention device (2) has the function of neutralizing splashes of fat droplets in the vertical (10) and horizontal (11) positions, has an upper edge (5) with a ledge on the inside (9) specifically for placing thereon the movable splatter prevention device (2) that has a central edge (7) having a lesser diameter than its outer edge (8) and which has the function of neutralizing the splatter of fat droplets out of the pan (1) in the horizontal position (11) which are the side splashes when beginning the frying process in the pan (1) and that after beginning the frying, the lid (3) is placed on the four guide pins (4) that are embedded or screwed vertically onto the movable splatter prevention device itself (2) which is designed to keep the lid (3) three centimeters suspended from the upper edge (5) of the pan (1) to allow air to enter (6) to prevent smothering the frying and water formation at the bottom of the pan (1) and fulfills the function of frying and not cooking the fry and the lid (3) also has a second function which is to neutralize splashes of fat droplets that try to get out in vertical position (10) from the bottom of the pan (1) and which splatter upwardly.

The present patent of invention refers to a pan that can be in the shape of a frying pan with a handle or with two side grips and both having their own lid or in the shape of a saucepan with its own lid, but having the differentiating factor that the edge of the pan does not come into contact with the edge of the lid in the process of frying foods, because it has a neutralizing system in the middle between the edge of the pan and the edge of the lid, which has the multiple function of neutralize vertical fat splatters which are those from the bottom of the pan that splatter upwardly and the horizontal splashes which spatter the sides of the pan and can make use of the lid, without smothering the frying food or causing water to form.

## Claims

1. A pan with a movable splatter prevention device, **characterized in that** it consists of a pan (1) that can be made of aluminum, aluminum with non-stick Teflon, stainless steel, cast iron, non-stick ceramic or induction ceramic and the upper edge diameter maintaining the measurements of standard market pans which are twenty-four centimeters, twenty-six centimeters, twenty-eight centimeters and thirty centimeters and with a similar format to that of a frying pan with a handle or two side grips with its own lid and also in the shape of a saucepan with two grips and its own lid, the upper edge (5) of the pan (1) does not come into contact with the edge of the lid (3) in the frying process and which has a movable splatter prevention device (2) which can be made of aluminum, nonstick aluminum, stainless steel, cast iron, or even heat-resistant thermoplastic, and which is placed on the upper edge (5) having a ledge (9) on the upper inside of the upper edge (5) of the pan (1), especially for placing thereon the movable splatter prevention device (2) which has a central edge (7) having a lesser diameter than its outer edge (8) and which is designed to neutralize splashes of fat droplets which splatter outside the pan (1) horizontally (11) which are the side splashes when beginning the frying process in the pan (1) and which after beginning to fry, is placed on the four guide pins (4) made of metal or rubberized metal and which are each three centimeters long and which are vertically embedded or screwed into the movable splatter prevention device (2) and that has the function of keeping the lid (3) three centimeters suspended over the upper edge (5) of the pan (1) designed to allow air to enter (6) in order to prevent smothering the frying and prevent water to form at the bottom of the pan (1) and fulfills the function of frying and not cooking the fry and the lid (3) also having a second function of neutralizing splashes of fat droplets which try to leave vertically (10) from the bottom of the pan (1) and which splatter from bottom to top.
